# EUROPEAN PATENT APPLICATION

(11) **EP 1 925 929 A1**
(43) Date of publication of application: **28.05.2008**
(21) Application number: 06124812.6
(22) Date of filing: 27.11.2006
(51) Int. Cl.: G01N 21/25, G01J 3/32, G01J 3/36

(54) **Multivariate detection of molecules in bioassay**

(71) Applicant: Koninklijke Philips Electronics N.V., 5621 BA Eindhoven (NL)
(72) Inventor: The designation of the inventor has not yet been filed
(74) Representative: van Wermeskerken, Stephanie Christine

(57) **Abstract**

The invention relates to detection of target molecules in an assay, such as a bio-assay, and in particular to multivariate detection of target molecules. A detector system is disclosed, the detection system comprising an optical guide element (16) for directing luminescence radiation (7) from an associated sample towards a multivariate element (8), the sample contains probe molecules that specifically binds to target molecules; a multivariate element (8) for spatially separating the luminescence radiation (7; 14; 15) to create a plurality of spectral patterns; and a detector (13) for detecting the intensity of a set of spectral patterns, so as to determine the presence of binding complexes between probe molecules and target molecules in the sample.

## Description

### FIELD OF THE INVENTION

The invention relates to detection of target molecules in an assay, and in particular to multivariate detection of target molecules.

### BACKGROUND OF THE INVENTION

Detection methods for particular biological molecules (bio-molecule) are manifold and many different approaches are presently available to the skilled person. The detection of specific biological molecules has a range of important practical applications, including gene identification for diagnostic purposes.

In general, the detection of biological specimen (the "target") such as polynucleotides, DNA, RNA, cells, and antibodies can especially be performed on an array for example a so-called bio-array (or micro-array) whereupon corresponding probe molecules are attached at various sites on the array. Target-probe examples include: DNA/RNA-oligonucleotide, antibody-antigen, cell-antibody/protein, hormone receptor-hormone, etc. When the target is bound or hybridised to a corresponding probe molecule, detection of the target bio-molecule may be performed by a variety of optical, electronic and even micromechanical methods.

A commonly used technique for detection of molecular binding on bio-arrays is optical detection of fluorescent labelled targets also known as a "label" or "marker". In general, a label may be any agent that is detectable with respect to its physical distribution and/or the intensity of the outgoing signal it gives. Fluorescent agents are widely used, but alternatives include phosphorescent agents, electroluminescent agents, chemiluminescent agents, bioluminescent agents, etc.

In fluorescence detection fluorophores are excited by directing an excitation beam towards the sample holding the fluorophores and the resulting fluorescence radiation is detected. The wavelength of the fluorescence radiation is normally different from the wavelength of the excitation beam that is used to induce the fluorescence. Therefore, the fluorescence intensity is normally determined using an interference filter that blocks the excitation wavelengths and transmits the fluorescence wavelengths.

When several different fluorophores are present in a sample under investigation, these spectra may partially overlap and it usually becomes very difficult to separate the signal from the different fluorophores using an interference filter. Often, one will need to use a spectrometer to look at the spectral information in order to distinguish between these fluorophores.

The published international patent application WO 03/038413 discloses an apparatus for analyzing a fluorescent image of a biochip including a light source for generating excitation light, a diffusion filter for diffusing the excitation light, an excitation filter for filtering light having a wavelength within a first spectrum range out of the excitation light, a beam splitter for filtering the excitation light to be irradiated on the sample and filtering out light having a wavelength within a second spectrum range out of the light emitted from the sample.

With such an apparatus or other apparatuses of the prior art, a number of problems and limitations are present. A problem relates to background signals caused by fluorophores other than the one under investigation. In a biosensor type apparatus, a background signal may originate from a material of the setup for example a glass plate, may emit fluorescence when illuminated with the excitation beam. The background signal may also originate from other, but unrelated, fluorophores that are present in the sample under investigation. Such background signals may result in a lower accuracy of the fluorescence detection. In another problem, multiplexing is limited when several different fluorophores are present. With multiplexing is meant that one biosensor assay uses several different fluorophores in order to measure several different target molecules at the same time, or in order to measure complementary characteristics of the same target molecule at the same time. When the fluorescence spectra overlap, the maximum number of different fluorophores that can be used for multiplexing is limited, and the accuracy is lowered, even if multiplexing is feasible.

To improve the accuracy of the detected fluorescence signals and/or to enable or improve multiplexing, the fluorescence signal must be measured in a spectrally controlled way, such that the characteristics of the total spectrum can be recognized and contributions of the various fluorophores can be quantified. An apparatus as disclosed above or other apparatuses of the prior art may be equipped with a multi-channel detector, such as a spectrometer to recognize contributions of the various fluorophores, for example by means of curve fitting. However due to overlap of broad spectra, this method is still somewhat inaccurate and the resulting multiplexing is limited, moreover a spectrometer is expensive and the substantial cost together with its limited added improvement, renders it unattractive in many applications.

The inventor of the present invention has appreciated that improved means for luminescence detection would be of benefit, and has in consequence devised the present invention.

### SUMMARY OF THE INVENTION

The present invention seeks to provide an improved way of handling luminescence detection, such as in connection with performing a bio-assay, and preferably, the invention alleviates, mitigates or eliminates one or more of the above or other disadvantages singly or in any combination.

According to a first aspect of the present invention there is provided, a detection system for detecting one or more target molecules in an assay, the detection system comprising:
- an optical guide element for directing luminescence radiation from an associated sample towards a multivariate element, the sample contains probe molecules that specifically binds to target molecules;
- a multivariate element for spatially separating the luminescence radiation to create a plurality of spectral patterns;
- a detector for detecting the intensity of a set of spectral patterns, so as to determine the presence of binding complexes between probe molecules and target molecules in the sample.

The target molecules may be bio-molecules conjugated to fluorophores, e.g. fluorophores conjugated to the primers of a PCR reaction. The sample may be a bio-sample, such as a sample for use in medical and biological research and applications.

The present invention may provide a detection system such as a biosensor for detecting the presence, and optionally quantity, concentration or similar type of parameter, of one or more biological targets. Biological detection systems are often highly complicated and the present invention is advantageous in providing systems with a high reliability of the collected data.

In an embodiment, the target molecules are detected by irradiating the sample with a beam of radiation, also referred to as excitation radiation, and subsequently detecting the resulting luminescence beam from the sample, i.e. the luminescence of the target molecules, or luminescence resulting from an interaction between the excitation radiation and the target molecules. The luminescence portion of detected radiation may photoluminescence, in particular fluorescence or phosphorescence. The beam of radiation is typically electromagnetic radiation in the visible or near-visible range, in the infrared (IR) or in the ultraviolet (UV) range. The radiation source for irradiating the sample may be an integral part of the detection system, or may be an external element.

In the context of the present invention, the term "fluorescence" and "phosphorescence" are to be understood in a broad sense as the emitted light resulting from a process where light has been absorbed at a certain wavelength by a molecule or atom, and subsequently emitted at the same or other wavelength after the lifetime of the excited molecule/atom in question. The emitted light is often, but need not be limited to, in the visible light spectrum (VIS), the UV spectrum, and the IR spectrum.

In the context of the present invention, the term "multivariate element" is to be understood in a broad sense, as an element capable of handling radiation at more than one wavelength or equivalent parameter of a radiation spectrum at a time.

By applying a multivariate element the accuracy of the fluorescence detection may be improved by measuring the radiation at multiple wavelengths without increasing the device costs significantly, since the multi-channel detector becomes redundant and can be replaced by a photo-multiplier (in case of low intensities) or a photodiode.

Moreover, by spatially separating the luminescence radiation, one obtains the flexibility of measuring wavelengths at multiple parts of the luminescence spectrum, thereby being able to measure the intensity of a set of spectral patterns. The set may comprise measurement at two or more wavelengths, or parts of a spectrum. The set may relate to luminescence from two or more fluorophores, either unrelated fluorophores giving rise to a background signal in combination with one or more fluorophores under investigation, or the set may relate to a set of spectral patterns arising from the presence of two or more fluorophores under investigation. More information may thereby be obtained resulting in a higher accuracy of the fluorescence signal. In addition, the spatial separation also enables extraction of spectral information of other fluorophores, thereby enabling measurement of multiple fluorophores simultaneously (multiplexing). Due to the multivariate analysis it is possible to achieve the same accuracy and sensitivity in an assay using more different fluorophores, as in an assay using only a single fluorophore.

In advantageous embodiments, the multivariate element may be build up of standard optical elements, thereby providing a cost efficient way of spatially separating the luminescence radiation to create a plurality of spectral patterns, and thereby avoiding the use of an expensive spectrometer. The multivariate element may comprise a spatial light modulator (SLM), a diffraction grating and one or more radiation guide elements, such as lenses, for directing and/or focussing radiation associated with the spectral patterns.

In advantageous embodiments, a spectral pattern of the set of spectral patterns may be selected by setting a grey level of pixels of the spatial light modulator. This is advantageous, since the pixels of the SLM may be driven electrically, thereby avoiding any moving parts when selecting a spectral pattern.

A further advantage of being able to set grey levels of pixels of the spatial light modulator is that by setting the pixels in accordance with weighing factors, multivariate calibration of the multivariate element may be performed, thereby maximizing the information that can be gained from the spectra.

In an advantageous embodiment, the sample is immobilized on a substrate, such as a bio-array arranged for analysis of biological targets.

In an advantageous embodiment, the sample is held in liquid form in a container, such as commonly used in connection with polymerase chain reaction (PCR), e.g. real-time PCR. It is an advantage that the invention may be used in connection with real-time PCR, where multiplexing is especially difficult.

In advantageous embodiments the detection system further comprises a handling unit for receiving the associated sample, the associated sample may be prepared to include the one or more target molecules prior to receiving the sample, or the handling unit may further comprises a preparation unit for preparing the sample.

By providing the detection system with a handling unit for receiving an associated sample, a system which is at least partly automated may be provided.

In a second aspect, the present invention relates to a method of detecting one or more target molecules in an assay, the method comprising:
- emitting a radiation beam towards an associated sample; the sample contains probe molecules that specifically bind to target molecules;
- directing luminescence radiation from the associated sample towards a multivariate element;
- spatially separating the luminescence radiation to create a plurality of spectral patterns;
- detecting the intensity of a set of spectral patterns, so as to determine the presence of binding complexes between probe molecules and target molecules in the associated sample.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1 illustrates an example of fluorescence spectra of three different fluorophores;
Fig. 2 shows a schematic drawing of a fluorescent biosensor;
Fig. 3 shows a schematic flow diagram illustrating a method of detecting one or more target molecules in an assay;
Fig. 4 illustrates a schematic embodiment of a detection system including a handling unit.

### DETAILED DESCRIPTION OF EMBODIMENTS

In biological research and medical diagnostics many biomarkers are detected with the aid of an attached fluorescent label. The apparatus generally used is a fluorescent scanner or microscope, generally referred to as a fluorescent biosensor, but for specific applications dedicated equipment is made based on the same detection principles.

The biomarkers are detected in connection with a bio-assay. One typical bio-assay involves immobilizing probe molecules in discrete locations on a micro-array, generally referred to as a substrate. A solution containing target molecules that bind with the attached probes is placed in contact with the bound probes under conditions sufficient to promote binding of targets in the solution to the complementary probes on the substrate to form a binding complex that is bound to the surface of the substrate. The bio-array may have a dimension in the micrometer range or even in the millimeter range. The number of different spots with distinct hybridization characteristics on the bio-array may vary from around 1 to 1000 per mm² on current arrays, and even higher, e.g. up to 10⁶ spots per mm². Within a spot on the array typically identical probe molecules are immobilized. In this context, a spot is to be understood as an area having a certain extension. The spot may have a 2D or 3D configuration. The bio-array may comprise a silicon wafer, a glass plate, a porous membrane, such as nylon, nitro-cellulose, etc.

In another type of bio-assay, the target molecules are not bound to a surface, but instead, the targets molecules are floating free in a liquid (for example water) held in a container. This is typically the case when real-time PCR is used. In real-time PCR, primers are floating free in a liquid, but due to their nature their labels are inactivated. The labels are only activated after the primer has taken part in a PCR reaction. As such, unused primers do not give background fluorescence and only target molecules will therefore yield fluorescence.

As elaborated upon above, when several different fluorophores are present in a sample under investigation, these spectra may partially overlap and it usually becomes very difficult to separate the signal from these fluorophores using an interference filter.

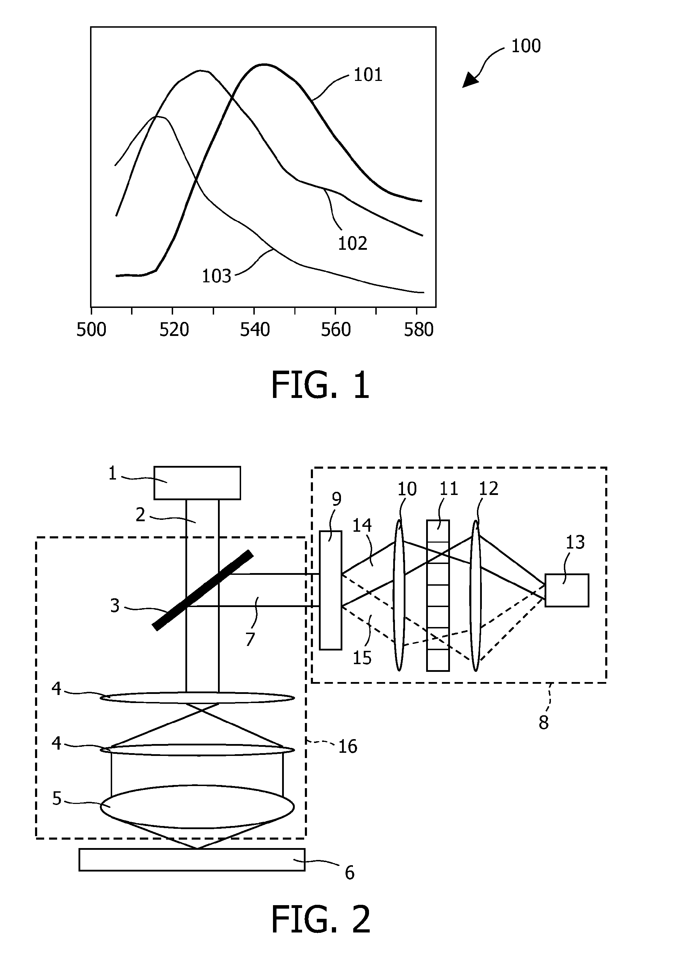

Figure 1 shows a graph 100 illustrating fluorescence spectra of three different fluorophores. In the figure, fluorescence intensity as a function of the wavelength in nanometers, here ranging from about 505 nm to about 580 nm are shown for the fluorophores Alexa Fluor 514 (denoted 101), Sytox Green (denoted 102) and Bodipy FL (denoted 103), all of which are commercially available from e.g. Invitrogen Corp. The invention is not limited to these or other fluorophores, the figure is shown to illustrate overlaps of broad spectra of different fluorophores.

Embodiments of the present invention can be used for separating the spectra of these, or other, different fluorophores.

Figure 2 shows a schematic drawing of a fluorescent biosensor, or detection system for detecting one or more target molecules in an assay. The detection system comprises a radiation source 1 for emitting a radiation beam 2 towards an associated substrate 6. In another embodiment, may the radiation source be emitted towards a sample held in a liquid container, or an array of liquid containers. The radiation source is also referred to as an excitation source 1 that produces an excitation beam. The radiation or excitation beam 2 travels through a dichroic beamsplitter 3 and through a lens set 4 and is then focused onto the substrate 6 using a high NA lens 5.

Fluorophores that are present on the substrate 6 will be excited by the excitation beam and this will cause them to emit luminescence radiation or fluorescence beam 7, which is collected by the high NA lens 5 and is then shaped by the lens set 4. The dichoric beamsplitter 3 is used to separate the paths of the remaining excitation beam 2 and the luminescence radiation 7. The dichroic beamsplitter 3, the lens set 4 and the high NA lens 5 may collectively be referred to as an optical guide element 16 with the purpose of directing luminescence radiation towards a multivariate element 8. The optical guide element is in the illustrated embodiment build up of a given set of optical elements, however in other embodiments other optical elements may be used as long as the purpose of directing luminescence radiation towards a multivariate element is fulfilled.

The luminescence beam 7 is directed into a multivariate element 8 for spatially separating the luminescence radiation to create a plurality of spectral patterns. The multivariate element 8 comprises in the illustrated embodiment a number of elements, the function of these elements are addressed below. Other elements for achieving the same purpose, that is to spatially separating the luminescence radiation to create a plurality of spectral patterns may by applied in other embodiments.

In the embodiment shown in figure 2, a spatial light modulator (SLM) 11 in combination with a diffraction grating 9 is applied. The SLM can be for example a liquid crystal panel, a digital mirror display, or a liquid crystal on silicon display. In the multivariate detection setup 8, the luminescence beam 7 first passes the diffraction grating 9, which causes a spatial separation of the fluorescence spectrum. In figure 2 a beam 14 with wavelength λ₁ and a beam 15 with wavelength λₙ are shown. The multivariate element comprises two radiation guide elements 10, 12 for directing and/or focussing radiation associated with the spectral patterns. As specific radiation guide elements, a first lens 10 is used to focus the different beams through the SLM 11 and a second lens 12 is used to focus the light onto a detector 13 for detecting the intensity for a set of spectral patterns, so as to determine the presence of binding complexes between probe molecules and target molecules on the associated substrate. In figure 2 a single detector is illustrated. By applying a single detector different spectral patterns may be measured sequentially. In an alternative embodiment more than one detector or a detector array may be used, so that signals, i.e. multiple spectral patterns, can be measured simultaneously. The detector or array of detectors may be photo-multipliers in case of low intensities or photodiodes.

A specific spectral pattern from the set of spectral patterns can be selected by applying or setting grey values at the various pixels of the SLM.

In an embodiment, the pixels of the SLM are driven into black and white states (here, the application of black and white states is understood as a two-level grey-scale), thereby obtaining that parts of the spectrum are transmitted and others are blocked. In this way specific fluorescence spectral bands and spectral bands for reference measurements can be measured selectively.

In an embodiment multivariate calibration methods are performed, e.g., calibration based on partial least squares regression. Such methods take into account signal variation in the entire spectrum, in this way maximizing the information that can be gained from the spectra.

A multivariate calibration procedure results in a so-called regression vector r=[r(λ₁),...,r(λₙ)], for the analyte of interest, e.g., a certain fluorophore. Wavelengths λ₁ to λₙ cover the measured spectrum. Taking the inner product of the regression vector with the measured spectrum, or "signal vector", s=[s(λ₁),...,s(λₙ)] then gives the concentration of the analyte of interest.

By displaying the weighing factors r(λ₁) to r(λₙ) on the pixels of the SLM and subsequently focusing the transmitted signal on the detector, the inner product can be taken in the optical domain. By subsequently displaying other regression vectors on the SLM, other desired signal patterns can be extracted from the spectrum. The SLM acts as a so-called multivariate optical element (MOE). The embodiment contains no moving parts; selecting spectral regions or changing regression vectors is all done electronically.

In an embodiment a static MOE is used. An SLM has the advantage that the weighing factors r(λ₁) to r(λₙ) can be adjusted electronically. When only one signal component is necessary for fluorescence signal determination, the MOE does not need to be adjustable and for example a mask with varying gray scales can be used as MOE. It is expected that an embodiment based on a static MOE is cheaper to produce.

In an embodiment, the multivariate detection setup may by blocking appropriate pixels of the SLM be used to suppress the excitation signal. Therefore, in this embodiment the dichroic beamsplitter is removed, or it is replaced with for example a polarizing beamsplitter or a beamsplitter which reflects for example 50% of the light.

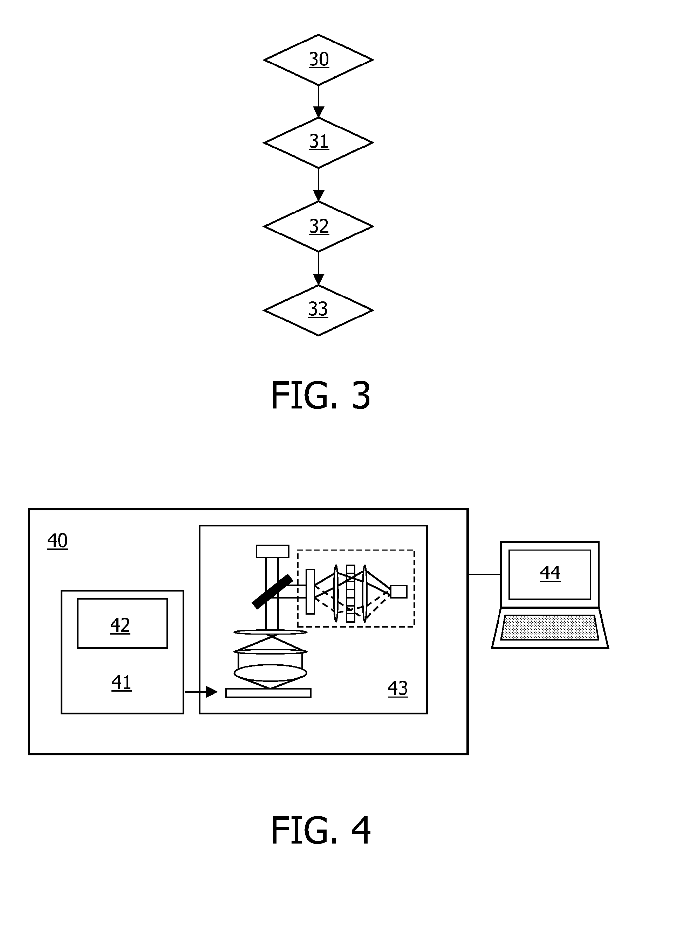

Methods of operating a detection system are explained in connection with figure 3 being a schematic flow diagram illustrating a method of detecting one or more target molecules in an assay. A radiation beam is emitted 30 towards an associated sample. Luminescence radiation is directed 31 towards a multivariate element. The luminescence radiation is spatially separated 32 by the multivariate element to create a plurality of spectral patterns. The intensity of a set of spectral patterns is detected 33, so as to determine the presence of binding complexes between probe molecules and target molecules in the associated sample.

In a more specific embodiment of operating a detection system, the following steps and possible additional steps may be conducted.

Prior to conducting the bio-assay, the regression vectors are determined. Regression vectors are determined for a specific composition of the target molecules. The determination is done before an experiment is conducted, and only needs to be done once unless the composition of the target molecules changes, after which the regression vectors are to be re-determined.

In a first step of the bio-assay the target molecules are prepared. For example, starting from a blood sample the components to measure should be separated. In the case of DNA, cell lysis, DNA collection, etc may be performed, after which a multiplication step follows, such as PCR which uses primers that are bound to a label. Due to this, the resulting copies of DNA will have a label attached to them. The DNA may then be hybridised to a substrate using capture probes or detection may be performed in a liquid container.

In a measurement step, the amount of fluorophores (and with it the amount of DNA) is determined using the multivariate analysis, where positive and negative component of the regression vector of the target molecules are set as grey scales on the SLM and the summed detection signals (i.e. the sum of the positive and negative detected signals) will give the concentration of the fluorophore. This is done in a positive step and a negative step because it is not possible to display negative numbers on a gray scale.

The procedure is repeated for each target molecule under investigation.

The steps of figure 3 and optionally additional steps may be performed, possibly in an automated or semi-automated manner, in a detection system. Such apparatuses and systems may include a handling unit for receiving the associated sample. A schematic embodiment of a detection system 40 including a handling unit 41 is illustrated in figure 4. The associated sample may be prepared with a sample including the one or more target molecules prior to receiving the sample, or the handling unit may be further comprising a preparation unit 42 for preparing the sample in the preparation unit. The detector system comprises an optical system 43, as explained in connection with figure 2. Measured intensities may be recorded and handled by a computer system 44 connected to the detector. The computer system may also be applied for controlling the SLM and other parts of the detector system 40. Moreover, the computer system may handle the calculation or determination of the presence of a target molecule, the quantity, the concentration, etc., as well as operating the system in order to perform the necessary steps of performing multivariate calibration. Etc.

Although the present invention has been described in connection with the specified embodiments, it is not intended to be limited to the specific form set forth herein. Rather, the scope of the present invention is limited only by the accompanying claims. In the claims, the term "comprising" does not exclude the presence of other elements or steps. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A detection system for detecting one or more target molecules in an assay, the detection system comprising:
- an optical guide element (16) for directing luminescence radiation (7) from an associated sample towards a multivariate element (8), the sample contains probe molecules that specifically bind to target molecules;
- a multivariate element (8) for spatially separating the luminescence radiation (7; 14; 15) to create a plurality of spectral patterns;
- a detector (13) for detecting the intensity of a set of spectral patterns, so as to determine the presence of binding complexes between probe molecules and target molecules in the sample.

2. The detection system according to claim 1, wherein the multivariate element comprises a spatial light modulator (11).

3. The detection system according to claim 2, wherein the multivariate element comprises a diffraction grating (9) for spatially separating the luminescence radiation.

4. The detection system according to claim 2, wherein the spatial light modulator (11) is selected from the group of a liquid crystal display, a digital mirror display and a liquid crystal on silicon display.

5. The detection system according to claim 2, wherein the multivariate element further comprises one or more radiation guide elements (10; 12) for directing and/or focussing radiation associated with the spectral patterns.

6. The detection system according to claim 1, wherein the detector comprises an array of detectors.

7. The detection system according to claim 2, wherein a spectral pattern of the set of spectral patterns is selected by setting a grey level of pixels of the spatial light modulator.

8. The detector system according to claim 7, wherein multivariate calibration of the multivariate element is done by setting the pixels of the spatial light modulator in accordance with weighing factors.

9. The detector system according to claim 1, further comprising a radiation source for emitting a radiation beam towards the associated sample.

10. The detector system according to claim 1, wherein the target molecules are bio-molecules conjugated to one or more fluorophores.

11. The detector system according to claim 1, wherein the sample is immobilized on a substrate (6).

12. The detector system according to claim 1, wherein the sample is held in liquid form in a container.

13. The detection system according to claim 1, further comprising a handling unit (41) for receiving the associated sample, the associated sample being prepared to include the one or more target molecules prior to receiving the sample, or the handling unit further comprising a preparation unit (42) for preparing the sample.

14. A method of detecting one or more target molecules in an assay, the method comprising:
- emitting (30) a radiation beam towards an associated sample; the sample contains probe molecules that specifically bind to target molecules;
- directing (31) luminescence radiation from the associated sample towards a multivariate element;
- spatially separating (32) the luminescence radiation to create a plurality of spectral patterns;
- detecting (33) the intensity of a set of spectral patterns, so as to determine the presence of binding complexes between probe molecules and target molecules in the associated sample.

15. The method according to claim 14, wherein a set of spectral patterns are detected sequentially or simultaneously.
